Europäisches Patentamt

European Patent Office

Office européen des brevets

(19)

(11) **EP 1 289 095 A1**

(12) **EUROPEAN PATENT APPLICATION**

(43) Veröffentlichungstag:
 **05.03.2003 Patentblatt 2003/10**

(51) Int Cl.⁷: **H02J 3/18**

(21) Anmeldenummer: **01810836.5**

(22) Anmeldetag: **28.08.2001**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(71) Anmelder: **ABB RESEARCH LTD.**
 **8050 Zürich (CH)**

(72) Erfinder:
 • **Rehtanz, Christian**
  **5405 Baden-Dättwil (CH)**
 • **Westermann, Dirk**
  **8050 Zürich (CH)**

(74) Vertreter: **ABB Patent Attorneys**
 **c/o ABB Schweiz AG**
 **Brown Boveri Strasse 6**
 **5400 Baden (CH)**

(54) **Elektroenergieregelungssystem und Verfahren zum Einstellen elektrischer Zustandsgrössen und/oder Parameter in einer Stromleitung**

(57) Die Erfindung ist gerichtet auf ein Elektroenergieregelungssystem (1) in einem Elektroenergiesystem, aufweisend: eine Leistungsregelungseinheit (2) zum Einstellen elektrischer Zustandsgrößen und/oder Parameter in einer zu regelnden Stromleitung des Elektroenergiesystems mit: Mitteln (3) zum Erfassen elektrischer Kenngrößenwerte ($\underline{u}_1$) der Stromleitung; einem Funktionsprozessor zum Anwenden einer Kontrollfunktion ($F_1(\underline{u}_1)$) aus einer mathematischen Menge von Kontrollfunktionen auf die elektrischen Kenngrößenwerte und zum Bestimmen von Steuergrößen ($\underline{y}$) für das Erzielen der Parameter; und Koordinationsmittel zum Bestimmen einer Kontrollfunktion ($F_1(u_1)$) aus der Menge von Kontrollfunktionen anhand von Betriebszuständen des Elektroenergiesystems. Durch dieses System lässt sich eine prädiktive abgestimmte Regelung des Elektroenergieregelungssystems erreichen, die auch ungewöhnliche Betriebszustände des Elektroenergiesystems stabilisieren kann.

Fig. 1

EP 1 289 095 A1

**Beschreibung**

Technisches Gebiet

Die vorliegende Erfindung betrifft ein Elektroenergieregelungssystem in einem Elektroenergiesystem mit modifizierbaren Regelungs- respektive Kontrollfunktionen und ein entsprechendes Verfahren zum Einstellen der elektrischen Zustandsgrößen und/oder Parameter in einer Stromleitung, die zu einem solchen Elektroenergiesystem gehört.

Stand der Technik

Elektroenergiesysteme dienen der Bereitstellung und/oder Verteilung elektrischer Energie zu Abnehmern. Sie bestehen aus Generatoren wie Wasser, Kohle- oder Kernkraftwerken, Speicherbatterien u.ä. (Quellen), einem Leitungs- und Kabelsystem, und Abnehmern, d.h. elektrischen Verbrauchern (Lasten). Das Leitungs- und Kabelsystem verbindet die Generatoren netzartig mit den Verbrauchern. Alle permanent angekoppelten Elemente nehmen an einem solchen Elektroenergiesystem teil. Durch die enge Verknüpfung der verschiedenen europäischen Stromanbieter kann man bezüglich Westeuropa von einem kontinentweiten Elektroenergiesystem sprechen.

Die Stromführung im Leitungssystem eines Elektroenergiesystems erfolgt grundsätzlich nach dem Ohmschen Gesetz. Um trotz nicht optimierter Leitungen eine allgemein gleichmäßige Auslastung zu erreichen, und damit eine wirtschaftliche, umweltfreundliche und sichere Stromübertragung gewährleisten zu können, sind sog. leistungselektronische Kompensatoren entwickelt worden. Diese, auch als FACTS (flexible alternate currency transmission system)-Geräte bezeichneten Einheiten sind in der Lage, Leistung von einer Leitung auf eine andere zu kommutieren, beispielsweise durch Strominjektion, Phasenwinkelregulierung, oder Stromspeicherung. Sie dienen der Sicherung von Stromqualität und -quantität.

Auf Änderungen an der Stromlieferungssituation, beispielsweise durch Mehr- oder Minderverbrauch eines Energieverbrauchers, kann eine Leistungsregelungseinheit innerhalb gewisser Grenzen robust reagieren, um die Stabilität und die anderen, oben definierten Ziele für das Elektroenergiesystems zu gewährleisten. Dazu misst die Leistungsregelungseinheit verschiedene, elektrische Kenngrößen des durch die zu regelnde Stromleitung fließenden Stroms. Anhand der so ermittelten Werte bestimmt ein Algorithmus die vorzunehmenden Maßnahmen des Leistungsregelungsgeräts. Das Leistungsregelungsgerät hält durch geeignete Steuergrößen die Zustandsgrößen/Parameter der zu regelnden Leitung innerhalb vorgegebener Wertespannen, die in ihrer Gesamtheit einen stabilen Regelungsbereich definieren.

Falls ein Stromnetz mit mehreren Leistungsregelungseinheiten gestört ist, beispielsweise durch einen Kurzschluß, kann es passieren, daß zwei solcher Einheiten, die dort installiert sind, versuchen, diesen Ausfall durch Gegensteuermaßnahmen auszugleichen, wobei die Einheiten möglicherweise gegeneinander arbeiten, so daß es zu einer Instabilität des gesamten Elektroenergiesystems kommen kann, die schließlich zu Schäden an Komponenten führen kann. Da die Leistungsregelungseinheiten Reaktionszeiten im Millisekundenbereich aufweisen, während das zentrale Systemkontrollmanagement möglicherweise erst nach 10 oder mehr Minuten die Störung bemerken kann und dann manuell eingreifen könnte, lassen sich solche Probleme mit Geräten aus dem Stand der Technik prinzipbedingt praktisch nicht vermeiden.

Bei größeren Abständen der an der Instabilität beteiligten Stromgeneratoren kommt es sogar schneller zu solchen Instabilitäten, da hierfür die Impedanz zwischen den Generatoren maßgeblich ist. Da auch Leistungsregelungseinheiten die Impedanz vergrößern können und damit die scheinbare Distanz zwischen Generatoren durch den Einsatz solcher Geräte wächst, erhöht ihr Einsatz das Risiko von Instabilitäten im System.

Die Konfigurierung einer Leistungsregelungseinheit ist eine spezielle konstruktive Tätigkeit, die für jede individuelle Leistungsregelungseinheit in einer spezifischen Situation durchgeführt werden muß. Für das Design einer zu integrierenden Leistungsregelungseinheit müssen alle anderen Regelungseinheiten des Elektroenergiesystems berücksichtigt werden.

Es müssen zudem ggfs. alle anderen Leistungsregelungseinheiten des Systems an die neue Situation, welche durch die Integration einer weiteren Leistungsregelungseinheit entstanden ist, angepasst werden, damit diese die Regulierung in einem stabilen Bereich von Werten halten können.

Die notwendige Anpassung erfolgt anhand rechnerischer Verfahren durch das Lösen von Differentialgleichungssystemen, welche das Verhalten des Elektroenergiesystems beschreiben. Da derart komplexe Gleichungssysteme nicht sinnvoll in einem Schritt gelöst werden können, werden zunächst Teilsysteme berechnet und als vereinfachte Gleichungen zu Metagleichungssystemen zusammengefügt. Diese Vorgehensweise ist sehr arbeits- und rechenaufwendig, zumal für verschiedene Belastungszustände des Elektroenergiesystems mehrfach eine Analyse durchgeführt werden muß.

Kontrollierte Übertragungswege werden heute zunehmend benötigt, um eine für einen konkurrenzfähigen Übertragungssystembetrieb benötigte Übertragungslogistik bereitzustellen. Jedoch ist die Zahl der geregelten Stromleitungen heute limitiert, da das Verbindungskontrollsystem des Gesamtsystems nicht in der Lage ist, mit potentiellen adversen Interaktionen der geregelten Leitungen fertig zu werden. Dieses Problem könnte möglicherweise beseitigt werden, indem Regelungseinheiten für das Gesamtnetz verwendet werden, die allerdings ein völlig neues Hochgeschwindigkeits-Netzwerkregelungssystem erfordern würden. Sogar dann könnte jedoch eine adverse Interaktion nicht zuverlässig ausgeschlossen werden.

Es besteht damit ein Bedarf an Leistungsregelungssystemen, die in der Lage sind, auch bei Störungen in stabilen Bereichen zu arbeiten und die keine Änderungen bei Erweiterungen oder Modifikationen am Gesamtsystem erfordern. Der Erfindung liegt damit die Aufgabe zugrunde, entsprechende Geräte und Verfahren bereitzustellen, welche durch ihre "Neutralität" bei verschiedensten Änderungen am Elektroenergiesystem problemfrei betrieben werden können.

Darstellung der Erfindung

Diese Aufgabe wird gelöst durch die Bereitstellung eines Elektroenergieregelungssystems gemäß dem unabhängigen Patentanspruch 1, das Verfahren gemäß dem unabhängigen Patentanspruch 14, sowie das Regelsystem gemäß dem unabhängigen Patentanspruch 24. Weitere vorteilhafte Ausgestaltungen der Erfindung ergeben sich aus den abhängigen Patentansprüchen, der Beschreibung und den beigefügten Zeichnungen.

Der Erfindung liegt das Prinzip zugrunde, hinsichtlich neuer Übertragungsmöglichkeiten und effektiverer Netzwerkausnutzung eine möglichst effektive Systemerweiterung zu gestatten, die ein völliges Neuentwerfen des Gesamtsystems bezüglich der Regelung vermeidet.

In einem Aspekt betrifft die Erfindung das Prinzip der prädiktiven Abstimmung, bei der die verschiedenen Elektroenergieregelungssysteme in einem Elektroenergiesystem eine Koordination mit dem Elektroenergiesystem durchführen.

In einem weiteren Aspekt betrifft die Erfindung einen Ansatz zur Regelung von Energieleitungen, bei der in allen Betriebszuständen stabile Bereiche von elektrischen Kenngrößen eingehalten werden können, die zumindest nicht kleiner sind als der stabile Bereich eines Normalbetriebs.

In noch einem Aspekt betrifft die Erfindung ein Regelungssystem für Energieleitungen, das innerhalb kürzester Zeit auf Betriebszustandsänderungen adäquat und stabilitätserhaltend reagieren kann.

In einem weiteren Aspekt betrifft die Erfindung ein Regelungssystem, das sowohl für Wechselstromsysteme als auch für Gleichstromsysteme verwendet werden kann.

Die Erfindung ist Teil einer Reihe von Maßnahmen, die der oben definierten Aufgabe dienen und die unter dem Begriff NISC (TM) "nonintrusive system control architecture" zusammengefaßt werden.

Die Erfindung ist zunächst gerichtet auf ein Elektroenergieregelungssystem in einem Elektroenergiesystem, aufweisend:

eine Leistungsregelungseinheit zum Einstellen elektrischer Zustandsgrößen und/oder veränderbarer Parameter in einer zu regelnden Stromleitung des Elektroenergiesystems mit:

- Mitteln zum Erfassen elektrischer Kenngrößenwerte der Stromleitung;
- einem Funktionsprozessor zum Anwenden einer Kontrollfunktion aus einer mathematischen Menge von Kontrollfunktionen auf die elektrischen Kenngrößenwerte und zum Bestimmen von Steuergrößen für das Erzielen der Zustandsgrößen und/oder Parameter; und

Koordinationsmittel zum Bestimmen einer Kontrollfunktion aus der Menge von Kontrollfunktionen anhand von Betriebszuständen des Elektroenergiesystems.

Unter einer Leistungsregelungseinheit ist dabei ein gattungsgemäß typisches Gerät zur Regelung einer Stromleitung zu verstehen, wie sie im Stand der Technik bekannt sind, beispielsweise FACTS-Geräte, Regeltransformatoren, einfache Schalter, geschaltete Kompensationselemente u.ä., wobei das erfindungsgemäße Gerät gegebenenfalls Zusatzelemente aufweisen kann, die es in die Lage versetzen, die zusätzlichen Funktionen der Erfindung auszuführen. Die meisten der zur Regelung von Schaltungen verwendeten Elemente lassen sich mit der Erfindung kombinieren. Auch ist es möglich, eine vollständig geregelte Leitung, beispielsweise in Gleichstromtechnik, durch die Erfindung steuern zu lassen.

Eine zu regelnde Stromleitung ist eine Verbindung von zwei Netzknoten, wie ein Kabel oder eine Freiluftleitung, beispielsweise zur Verbindung von Generatoren oder zur Verbindung mit Verbrauchern, in einem Elektroenergiesystem, in die die Leistungsregelungseinheit eingebaut ist und deren elektrische Zustandsgrößen/Parameter kontrolliert werden sollen. Unter elektrischen Zustandsgrößen bzw. Parametern der zu regelnden Stromleitung sind solche elektrischen Größen zu verstehen, welche zur Beschreibung des in der Leitung fließenden Stroms dienen können, beispielsweise dessen Spannung oder Stromstärke, der Phasenwinkel (soweit ein Wechselstromsystem betroffen ist) und die Impedanz. Eine Zustandsgröße ist hierbei eine veränderliche Eigenschaft der Energie, während unter einem Parameter eine physikalische Eigenschaft des Trägers zu verstehen ist.

Die Leistungsregelungseinheit kann verschiedene, für die Einhaltung der Zustandsgrößen/Parameter relevante elektrische Kenngrößen messen und aus den Messwerten Steuergrößen ableiten. Die elektrischen Kenngrößen werden dabei in der Regel direkt an der zu regelnden Stromleitung abgenommen. Es ist anzumerken, daß die Zustandsgrößen bzw. Parameter der Stromleitung und die elektrischen Kenngrößen identisch oder zumindest überlappend sein können, da beide an derselben Stromleitung bestimmt werden können.

Die Steuergrößen sind wiederum Zahlenwerte, welche an ein Stellelement, das nicht der Teil der Erfindung und aus dem Stand der Technik bekannt ist, weitergegeben werden, und das daraufhin die Zustandsgrößen bzw. Parameter der zu regelnden Stromleitung entsprechend anpaßt.

Die Ableitung der Steuergrößen aus den Kenngrößenwerten geschieht mit Hilfe einer Kontrollfunktion in einem Funktionsprozessor, welche als Parameter zumindest die elektrischen Kenngrößen aufweist und welche diese mit vorgegebenen Algorithmen so verrechnet, daß als Ergebnis die Steuergrößen herauskommen. Der Begriff der Kontrollfunktion ist hierbei weit auszulegen und umfaßt alle möglichen Zuordnungsverfahren inklusive der Verwendung von Wertetupel- oder -paartabellen.

Unter einem Funktionsprozessor ist im Sinne der vorliegenden Erfindung jedes Mittel zu verstehen, sei es ein Datenverarbeitungsprogramm oder eine spezielle analoge oder Schaltlogik, die in der Lage ist, die Kontrollfunktion oder alle Kontrollfunktionen aus der Menge der Kontrollfunktionen auszuführen.

Erfindungsgemäß wird die anzuwendende Kontrollfunktion aus einer Menge von Kontrollfunktionen bestimmt, indem das Koordinationsmittel eine geeignete Erfassung des aktuellen Betriebszustands vornimmt und anhand dieses Zustands die Kontrollfunktion bestimmt. Die Bestimmung erfolgt hierbei aus einer Menge von Kontrollfunktionen, wobei der Begriff der Menge im mathematischen Sinne zu verstehen ist und eine abzählbare Anzahl verschiedener Kontrollfunktionen ebenso umfaßt wie eine unendliche, sich aus der Metakontrollfunktion ergebende Anzahl.

Der Begriff der Bestimmung ist ebenfalls breit auszulegen. So kann er in der Modifikation einer vorgegebenen Kontrollfunktion durch spezielle, vom Betriebszustand abhängige Terme ebenso erfolgen wie durch die simple Auswahl einer von mehreren unveränderlichen Kontrollfunktionen.

Alle verwendeten Werte und Steuergrößen werden vorzugsweise als Vektoren aufbereitet von dem System genutzt werden, um eine einfache Verwendung in den Funktionen bzw. Abbildungen zu ermöglichen. Dem ist durch die Verwendung entsprechender Variablen mit Unterstreichung Rechnung getragen worden. Es versteht sich jedoch, daß auch andere Werteaufbereitungen verwendet werden können, wenn sich diese als praktikabel erweisen sollten und/oder dem jeweils aktuellen Stand der Technik repräsentieren.

Es handelt sich also um einen insgesamt dreistufigen Prozess, der mit dem erfindungsgemäßen Elektroenergieregelungssystem ausgeführt werden kann:

1. Wird -irgendwo- im Elektroenergiesystem, der Betriebszustand des Systems bestimmt. Dieser wird verwendet, um

2. eine anzuwendende Kontrollfunktion zu bestimmen; und

3. Wird die Kontrollfunktion auf Werte von Kenngrößen angewendet, um Steuergrößen zu generieren.

Zur Realisierung insbesondere der Koordinationsmittel stehen verschiedene Möglichkeiten zur Verfügung. In einer bevorzugten Ausführungsform weist das Koordinationsmittel auf:

eine Koordinationskontrolleinheit mit

- Mitteln zum Erfassen elektrischer Metakenngrößenwerte des Elektroenergiesystems, welche den Betriebszustand des Elektroenergiesystems charakterisieren;
- einem Koordinationsprozessor zum Anwenden einer Abbildung auf die Metakenngrößenwerte zum Bestimmen einer Auswahlinformation für eine geeignete Kontrollfunktion;
- Mitteln zum Übertragen einer Auswahlinformation mit hinreichender Geschwindigkeit über die geeignete Kontrollfunktion an die Leistungsregelungseinheit; sowie

einen Metafunktionskontrollprozessor in der Leistungsregelungseinheit zum Bestimmen der geeigneten Kontrollfunktion anhand der übertragenen Auswahlinformation.

Die elektrischen Metakenngrößen sollten so ausgewählt sein, daß sie einen hinreichend guten Überblick über den jeweils aktuellen Betriebszustand des Elektroenergiesystems geben können. Welche Metakenngrößen geeignet sind, hängt damit auch von der "Intelligenz" der Abbildung ab, die anhand der Metakenngrößenwerte eine Auswahlinformation erzeugt, die dann von der Metakontrollfunktion zur Bestimmung der anzuwendenden Kontrollfunktion verwendet wird. Die Abbildung ist in dieser bevorzugten Ausführungsform der Erfindung eine wichtige Komponente, da hier eine Bewertung der Kenngrößen hinsichtlich des vermutlichen Betriebszustands vorgenommen und anhand dieser Abschätzung das bestgeeignete "Verhalten" der Leistungsregelungseinheit vorgegeben wird.

Die Auswahlinformation ist ein Datum bzw. eine Sammlung von Daten, beispielsweise vektoriell, in geeigneter Form, um von der Metakontrollfunktion verwendet zu werden und die eigentliche, anzuwendende Kontrollfunktion zu bestimmen.

Die Auswahlinformation wird mittels eines Übertragungsmittels von der Koordinationskontrolleinheit an die Leistungsregelungseinheit übertragen, wo sie verwendet wird.

Die Übertragung soll hierbei erfindungsgemäß mit hinreichender Geschwindigkeit erfolgen. Hierunter ist zu verstehen, daß die Übertragung so schnell erfolgt, daß das erfindungsgemäße Elektroenergieregelungssystem hinreichend schnell reagieren kann, um das Elektroenergiesystem auch bei sich ändernden Betriebszuständen in einem stabilen Zustand zu erhalten.

Das erfindungsgemäße Elektroenergieregelungssystem kann dadurch gekennzeichnet sein, daß der Metafunktionskontrollprozessor Mittel zum Anwenden einer Metakontrollfunktion aufweist, welche die Bestimmung der geeigneten Kontrollfunktion bewirkt und die Auswahlinformation weiterhin enthält elektrische Metakenngrößenwerte, die bei der Anwendung der Metakontrollfunktion verwendet werden, um die Steuergrößen mit zu bestimmen.

Auf diese Weise können numerische Angaben wie Messwerte unmittelbar zur Bestimmung der Kontrollfunktion, nämlich zu ihrer Modifikation, mitverwendet werden. Somit ist es möglich, beispielsweise dieselbe Kontrollfunktion für verschiedene Betriebszustände zu verwenden, aber jeweils anzupassen, beispielsweise durch (vektorielle oder skalare) Multiplikation mit einem Faktor, der in der Auswahlinformation enthalten ist und mit dem das Ergebnis der Kontrollfunktion multipliziert oder sonstwie verrechnet wird.

Ein Faktor beim erfolgreichen Einsatz der erfindungsgemäßen Elektroenergieregelungssysteme kann die Geschwindigkeit sein, mit der die Kontrollfunktion bestimmt werden kann, wobei der Übertragung der Auswahlinformation an die Leistungsregelungseinheit eine wichtige Rolle zukommt. So kann eine Hochgeschwindigkeitsverbindung zwischen der Koordinationskontrolleinheit und der Leistungsregelungseinheit verwendet werden, um eine hinreichend schnelle Übertragung zu gewährleisten. Es ist ebenfalls möglich, daß die Leistungsregelungseinheit und die Koordinationskontrolleinheit in einem Gerät zusammengefasst sind. In diesem Fall kann auf eine Hochgeschwindigkeitsverbindung verzichtet werden bzw. kann diese geräteintern optimiert werden.

Zur Realisierung der verschiedenen Komponenten des erfindungsgemäßen Elektroenergieregelungssystems stehen verschiedene Möglichkeiten offen. So können die Prozessoren als mehrere oder eine einzelne Hardwareeinheit, beispielsweise einem Analogrechner ausgeführt sein. In einer bevorzugten, weil einfach zu implementierenden und mit den anderen Komponenten zu integrierenden Ausführungsform können der Koordinationsprozessor, der Metakontrollfunktionsprozessor und/oder der Funktionsprozessor als Programme für eine Datenverarbeitungsanlage realisiert sein.

Die vom Koordinationsmittel erfassten Metakenngrößen sollen einen möglichst guten Überblick über den jeweiligen Betriebszustand der Elektroenergiesystems geben. Die Qualität der gewinnbaren Informationen hängt allerdings nicht alleine von der Ableitung der Betriebszustände und der damit einhergehenden Formulierung einer Auswahlinformation ab. Insbesondere wird es bevorzugt, daß die Metakenngrößen zumindest teilweise identisch mit den Kenngrößen sind. Auf diese Weise kann die Bestimmung des Betriebszustands vereinfacht und beschleunigt werden, da lediglich lokal ableitbare Größen Verwendung finden. Diese Ausführungsform stellt allerdings die höchsten Anforderungen an die Auswertung der Metakenngrößen und mithin an die der Abbildung innewohnenden "Intelligenz".

Es ist genauso möglich, daß die Metakenngrößen zumindest teilweise in anderen Bereichen des Stromverteilungsssystems gemessen werden als in der zu regelnden Stromleitung. Eine möglichst verzögerungsfreie Übertragung zur raschen Identifikation von Änderungen des Betriebszustands ist dann wünschenswert.

Der Entwurf der regulären (Normalzustands-) Kontrollfunktion basiert auf einer gründlichen Netzwerkanalyse, bei der konventionelle robuste Regelungseinheiten-Designmethoden verwendet werden, beispielsweise die $H_\infty$ (H-unendlich) Regelung respektive Kontrolle oder die kontrollierten Lyapunov-Funktionen (vgl. unten). Falls die so konzipierte Regelungseinheit sich bei allen üblichen Betriebszuständen als robust erweisen sollte, braucht diese Netzwerkanalyse nur einmal durchgeführt zu werden, weitere Parametrisierungen oder strukturelle Veränderungen sind dann nicht mehr notwendig.

Falls jedoch der Betrieb nicht robust ist, sollte die Leistungsfähigkeit des Elektroenergieregelungssystems in regelmäßigen Intervallen überprüft werden, wobei die geregelten Zustandsgrößen/Parameter entsprechend angepasst werden müssen. Hierfür kann das Elektroenergieregelungssystem vorzugsweise aufweisen ein Analysesystem zum Analysieren der Kenngrößen und/oder der Metakenngrößen und zum Überprüfen und/oder ggfs. Ändern der Kontrollfunktionen, der Abbildung und/oder der Funktion des Metafunktionskontrollprozessors in Abhängigkeit von einem Ergebnis der Analyse.

Um die Analysefähigkeiten des Analysesystems weiter zu verbessern, kann es zudem wünschenswert sein, es mit zusätzlichen Informationen zu versorgen, die ein Bild des Betriebszustands des Elektroenergiessystems als Ganzes ermöglichen. Hierzu ist es sinnvoll, auf existierende Energiemanagement-Systeme zurückzugreifen, welche solche Informationen bereithalten. Die Erfindung kann mithin dadurch gekennzeichnet sein, daß das Analysesystem weiterhin Mittel zum Analysieren von externen Kenngrößen aufweist, welche von einem Energiemanagementsystem des gesamten Elektroenergiesystems bereitgestellt werden können oder bereitgestellt werden. Solche Kenngrößen können neben allgemeinene Informationen über das Elektroenergiesystem auch Sollgrößen für das System sein, um deren Einhaltung sich alle Elektroenergieregelungseinheiten bemühen sollen, und die daher ebenfalls in den Entwurf der Kontrollfunktionen, der Abbildung und der Metakontrollfunktion einfließen müssen.

Wie bereits erwähnt, ist der Begriff der "Bestimmung" einer geeigneten Kontrollfunktion weit zu fassen. Er umfaßt sowohl Modifikationen einer bestehenden Kontrollfunktion als auch Auswahl aus einem Set. Dementsprechend ist auch der Begriff der "Menge" von Kontrollfunktionen variabel. Die Menge von Kontrollfunktionen kann beispielsweise eine abzählbare Mehrzahl von Kontrollfunktionen sein, die durch eine Metakontrollfunktion bestimmt ist. Es kann sich hierbei beispielsweise um ein Set von Kontrollfunktionen handeln, die numeriert sind, wobei die Metakontrollfunktion eine einfache Listenzuordnung darstellt, welche bestimmten Vorgaben aus der Auswahlinformation eine der Kontrollfunktionen zuordnet.

Die Menge von Kontrollfunktionen kann auch ein Kontinuum darstellen, das durch eine Metakontrollfunktion beschrieben ist. In diesem Fall fließt beispielsweise die Auswahlinformation als Rechenterm in die Metakontrollfunktion ein, welche dann entsprechend ihrem Algorithmus eine geeignete Kontrollfunktion aus einer Basiskontrollfunktion generiert oder durch ihre Anwendung das Ergebnis moduliert bzw. modifiziert.

Ein wichtiges Konzept der vorliegenden Erfindung ist das Einstellen stabiler Wertebereiche für das zu regelnde Elektroenergiesystem. Diese stabilen Bereiche sind zunächst für einen regulären Betrieb definiert, dürfen aber bei Änderungen des Betriebszustands nicht neue instabile Bereiche aufweisen, in denen es zu Instabilitäten des Gesamtsystems kommen kann. Es wird daher bevorzugt, daß die Kontrollfunktionen die Steuergrößen so regulieren können, daß Werte vorgegebener elektrischer Kenngrößen der zu regelnden Stromleitung innerhalb vorgegebener, stabiler Wertebereiche gehalten werden können, wobei eine erste Kontrollfunktion für einen normalen Betrieb erste stabile Wertbereiche einhalten kann und zumindest eine zweite Kontrollfunktion für eine Änderung im Betriebszustand zweite stabile Wertbereiche einhalten kann, welche die ersten stabilen Wertbereiche mit umfassen.

Bei den Änderungen am Betriebszustand kann es sich sowohl um einen Störfall handeln als auch um eine Topolgieänderung wie eine betriebsbedingte Erweiterung (oder Verkleinerung) des Gesamtnetzes, daß zu dem Elektroenergiesystem gehört. Für die verschiedenen Störfallkategorien kann es vorzugsweise jeweils individuelle Kontrollfunktionen geben. Bei Änderungen am System sind ebenso eine Reihe von Kontrollfunktionen bzw. eine entsprechend modifizierte Kontrollfunktion oder eine Kombination der verschiedenen Möglichkeiten vorgesehen.

Die Erfindung ist ebenfalls auf ein Verfahren gerichtet, das beispielsweise mit dem erfindungsgemäßen Elektroenergieregelungssystem ausgeführt werden kann. Alles bezüglich der Vorrichtung gesagte gilt auch für das im folgenden vorgestellte Verfahren und umgekehrt, so daß eine wechselseitiger Bezug genommen und verwiesen wird.

Die Erfindung ist daher weiterhin gerichtet auf ein Verfahren zum Einstellen elektrischer Zustandsgrößen und/oder veränderbarer Parameter in einer zu regelnden Stromleitung eines Elektroenergiesystems mit folgenden Schritten

- Feststellen elektrischer Metakenngrößenwerte;
- Anwenden einer Abbildung auf die Metakenngrößenwerte zur Erzeugung einer Auswahlinformation hinsichtlich einer anzuwendenden Kontrollfunktion;
- Anwenden der Auswahlinformation auf eine Metakontrollfunktion, welche eine anzuwendende Kontrollfunktion aus einer mathematischen Menge von Kontrollfunktionen bestimmt; und
- Anwenden der festgelegten Kontrollfunktion auf elektrische Kenngrößenwerte der Stromleitung, welche die Steuergrößen zur Steuerung der Stromleitung festlegt.

Auch hier gilt, daß die verwendeten Werte beispielsweise als Matrix oder bevorzugt als Vektor aufbereitet sind, um eine Anwendung der verschiedenen Abbildungen bzw. Funktionen zu erleichtern.

Die Bestimmung einer Kontrollfunktion kann beispielsweise anhand der Auswahlinformation erfolgen, welche als modulierende Terme in die Kontrollfunktion eingebaut werden. Hierbei handelt es sich um eine Anwendung der Erfindung, bei der die Menge der Kontrollfunktionen ein Kontinuum darstellt, dessen Elemente durch die Terme bei Anwendung der Metakontrollfunktion quasi festgelegt werden. Selbstverständlich sind auch andere Methoden vorstellbar, bei denen eine Metakontrollfunktion eine aus einem Kontinuum von Kontrollfunktionen bestimmt.

Wie im Hinblick auf das erfindungsgemäße Elektroenergieregelungssystem bereits ausgeführt, können die Metakenngrößen zumindest teilweise identisch mit den Kenngrößen sein, um die Messung zu vereinfachen und die Geschwindigkeit bei der Ausführung des Verfahrens zu vergrößern.

Alternativ oder zusätzlich können die Metakenngrößen zumindest teilweise in anderen Bereichen des Elektroenergiesystems gemessen werden als in der zu regelnden Stromleitung.

Das Verfahren kann weiterhin in einer speziellen Ausführungsform der Erfindung so ausgelegt sein, daß die Abbildung bestimmte Wertebereich an Metakenngrößen bestimmten Auswahlinformationen für Kontrollfunktionen zuordnet und beim Zugehören der Metakenngrößenwerte zu einem bestimmten Bereich die zu diesem Bereich zugehörige Auswahlinformation der Metakontrollfunktion bereitstellt. Hierbei wird somit eine tatsächliche Auswahl aus einer abzählbaren Menge von Kontrollfunktionen getroffen, wobei ein Kontinuum von möglichen Metakenngrößenmmesswerten, beispielsweise Vektoren, so gruppiert wird, daß jeweils ganze Bereiche dieser Werte zur selben Kontrollfunktion führen.

Im übrigen kann, wie bereits erläutert, die Auswahlinformation weiterhin elektrische Metakenngrößenwerte enthalten, die bei der Anwendung der Metakontrollfunktion verwendet werden, um die Steuergrößen zu bestimmen. Die Werte bewirken damit, als Terme in die Metakontrollfunktion eingesetzt, eine unmittelbare Modulierung der Kontrollfunktion und damit eine Einflußnahme auf die Steuergrößen.

Auch im erfindungsgemäßen Verfahren kann zusätzlich eine Analyse durchgeführt werden, in der anhand der Kenngrößenwerte und/oder der Metakenngrößenwerte die Kontrollfunktionen, die Abbildung und/oder die Metakontrollfunktion Überprüft und/oder ggfs. geändert wird. Die Möglichkeit der Analyse und Änderung der eigentlichen Kernlogik bei der Ausführung des Verfahrens ist eine wichtige Option zur Verbesserung des Verfahrensverhaltens, da es sich auf diese Weise auch unerwarteten Veränderungen des Betriebszustands des Elektroenergiesystems anpassen kann.

Wie bereits angedeutet, wird eine schnelle Ausführung des Verfahrens bevorzugt, um eine rasche Reaktion auf Änderungen am Betriebszustand des Elektroenergiesystems zu gestatten. Daher wird es insbesondere bevorzugt, daß ein für die Durchführung des Verfahrens vom Feststellen elektrischer Metakenngrößen bis zum Anwenden der vorab festgelegten Kontrollfunktion auf elektrische Kenngrößen der Stromleitung benötigter Zeitraum kleiner ist als ein Zeitinterval, das zur Durchführung der Analyse und zum Ändern der Kontrollfunktionen, der Abbildung und der Metakontrollfunktion vorgesehen ist.

Dieser Zeitraum kann zumindest einhundertmal kleiner, vorzugsweise zumindest eintausendmal kleiner sein als das Zeitintervall.

Das Zeitintervall zur Durchführung der Analyse wird sich üblicherweise in etwa im Bereich von 5 bis 15 Minuten bewegen, kann jedoch bei komplexen Analysen auch im Stundenbereich liegen, während das Verfahren innerhalb von Sekunden oder sogar Sekundenbruchteilen reagieren können muß, um Instabilitäten im Elektroenergiesystem zu vermeiden. Typische Reaktionszeiten von Regelungssystemen können im Bereich um 50, beispielsweise von 30 bis 100 Millisekunden liegen, es gibt allerdings auch noch schnellere Regelungseinheiten.

Ein anderer Ansatz zur Beschreibung der vorliegenden Erfindung kann in einem Regelsystem liegen, das bestimmten Anforderungen genügen muß.

Um eine korrekte Funktion eines Elektroenergiesystems gewährleisten zu können, muß ein Elektroenergieregelungssystem in der Lage sein, das System in einem stabilen Bereich, dem sogenannten Einzugsgebiet, bezüglich der von ihm geregelten Kenngrößen zu halten. Hierzu dient die Kontrollfunktion, die so ausgelegt ist, daß sie unter bestimmten Bedingungen den stabilen Bereich einhalten kann. Wie jedoch im einführenden Teil erläutert, versagen herkömmliche Kontroller häufig bei Störungen und Änderungen an der Topologie des Elektroenergiesystems. Die erfindungsgemäße Lösung besteht bei dieser Sicht darin, mehr als einen stabilen Bereich mittels verschiedener Kontrollfunktionen zu ermöglichen, wobei die Einzugsgebiete, die bei Änderungen durch die anderen Kontrollfunktionen eingehalten werden sollen, jedenfalls nicht kleiner sein dürfen als das Einzugsgebiet im "Normal"-Betrieb, da sonst neue instabile Bereiche nach einer Änderung auftreten würden, in denen das Elektroenergiesystem nicht betrieben werden kann, obwohl die Regelung am Kontroller diese Bereiche zuließe.

Die Erfindung ist daher ebenfalls gerichtet auf ein Regelsystem in einem Elektroenergieregelungssystem für eine zu regelnde Stromleitung in einem Elektroenergiesystem, aufweisend:

eine mathematische Menge von Kontrollfunktionen, welche in der Lage sind, elektrische Zustandsgrößen und/oder veränderbare Parameter der kontrollierten Stromleitung innerhalb vorgegebener, stabiler Bereiche zu halten, wobei eine Basiskontrollfunktion für den Normalbetrieb vorgesehen ist, welche die elektrischen Zustandsgrößen/Parameter innerhalb erster vorgegebener stabiler Bereiche halten kann und die weiteren Kontrollfunktionen bezüglich dieser elektrischen Zustandsgrößen/Parameter größere stabile Bereiche aufweisen als die Basiskontrollfunktion.

Dieses Regelsystem kann vorzugsweise dadurch gekennzeichnet sein, daß eine Metakontrollfunktion eine der Kontrollfunktionen als anzuwendende Kontrollfunktion in Abhängigkeit von im Elektroenergiesystem gemessenen elektrischen Metakenngrößenwerten bestimmt werden kann.

Weiterhin kann es aufweisen eine Abbildung (die der oben definierten Abbildung entspricht) zum Abbilden der Metakenngrößenwerte auf eine Auswahlinformation über die anzuwendende Kontrollfunktion, wobei die Auswahlinformation auf die Metakontrollfunktion angewendet werden kann, um die anzuwendende Kontrollfunktion zu bestimmen.

Die Abbildung kann vorzugsweise eine Auswahlinformation erzeugen, welche zugleich elektrische Metakenngrößenwerte aufweist und die Metakontrollfunktion derart ausgelegt ist, daß diese Metakenngrößenwerte zur Modulierung der Kontrollfunktion verwendet werden können oder verwendet werden, wie oben im Hinblick auf das Verfahren erläutert wurde.

Das erfindungsgemäße Regelsystem kann weiterhin aufweisen ein Analysesystem, welche die Kontrollfunktionen hinsichtlich der zu erreichenden Stabilität analysieren und nötigenfalls anpassen kann.

Ein wichtiger, bevorzugter Aspekt der vorliegenden Erfindung, der sowohl das Elektroenergieregelungssystem als auch das Verfahren und das Regelsystem gleichermaßen betrifft, ist die Analyse und Formulierung von Kontrollfunktionen, welche den Anforderungen an einen stabilen Betrieb genügen.

Durch die Entwicklung möglichst robuster Kontrollfunktionen bereits in der Planungsphase kann ein häufiges Herunterladen von Kontrollfunktionen und Metakontrollfunktionen im Betrieb vermieden werden. Um eine solche Robustheit zu erlangen, stehen verschiedene Ansätze zur Verfügung, die auch miteinander kombiniert werden können.

Ein Ansatz stammt aus dem Bereich der Passivitätstheorie. Falls ein stabiles Energiesystem ohne ein neues, kontrollierbares Gerät angenommen wird, ist das System passiv, wenn ein bestimmte, unten wiedergegebene Energiefunktion erfüllt ist.

Es wird daher bevorzugt, daß für jede Kontrollfunktion aus der Menge an Kontrollfunktionen gilt, daß die folgende Energiefunktion V(T) für alle Zeitpunkte T≥0 existiert:

$$V(T) \leq V(0) + \int_0^T y(t)u(t)dt$$

$$\forall u(.),\ T \geq 0$$

wobei V(0) die Energiefunktion zum Zeitpunkt 0 ist , y eine elektrische Ausgangsgröße, und u eine elektrische Eingangsgröße,
und das Elektroenergiesystem passiv ist.

Falls ein zusätzlicher Netzwerkkontroller dieselben Bedingungen erfüllt und ebenfalls passiv ist, so sind bei de Systeme bei Parallelschaltung oder in einer Rückkopplungsschleife ebenfalls passiv und daher stabil. Dies bedeutet, daß die zusätzlichen Komponenten die Stabilität nicht selbst berühren, falls es keinen Energieeinfluß aus dem System gibt. Für den Normalbetrieb mit festgelegten Betriebsbedingungen ist dies ausreichend, jedoch sagt dieser Ansatz nichts über das Dämpfungsverhalten des resultierenden Systems aus. Der andere, sehr ähnliche Ansatz ist die Kontrollierte Lyapunov Funktion für ein System mit der Struktur

$$\dot{x} = f(x,u) = f_0(x) + \sum_{i=1}^m u_i f_i(x)$$

Falls das Elektroenergiesystem ohne Kontrollinput stabil ist, kann gezeigt werden, daß es eine positive Energiefunktion $V_{PS}(x)$ mit

$$\dot{V}_{PS} \leq 0$$

gibt. Das System mit dem Elektroenergieregelungssystem ist stabil, falls bei Kombination von $V_{PS}$ mit der Energiefunktion des kontrollierbaren Elements $V_{CO}$ die resultierende Funktion eine Lyapunov-Funktion für das neue System ist.

Dies gilt, wenn die bevorzugte Ausführungsform angewendet wird, nach der für jede Kontrollfunktion aus der Menge der Kontrollfunktionen gilt, daß folgende Bedingung für das Elektroenergiesystem erfüllt ist:

$$\dot{V} = \dot{V}_{PS} + \dot{V}_{CO} \leq \dot{V}_{CO} \leq 0$$

wobei V die resultierende Energiefunktion, Vps die Energiefunktion des Systems vor dem Hinzufügen einer neuen Regelungseinheit, und Vco die Energiefunktion der Regelungseinheit sind Mit den obigen Ansätzen kann ein Neuentwurf der Elektroenergieregelungssysteme vermieden und ein stabiler Betrieb mit anderen Regelungssystemen erzielt werden.

Kurze Beschreibung der Zeichnungen

Im folgenden soll die Erfindung konkreter und weitgehender erläutert werden, wobei auf die beigefügten Zeichnungen Bezug genommen werden wird, in denen folgendes dargestellt ist:

Fig. 1 zeigt ein Elektroenergieregelungssystem nach einer bevorzugten Ausführungsform der vorliegenden Erfindung mit einem angeschlossenen Analysesystem;

Fig. 2 zeigt exemplarisch stabile Bereiche eines Elektroenergiesystems vor und nach einer Änderung am System;

Fig. 3 zeigt schematisch die Funktionszusammenhänge zwischen den verschiedenen Komponenten der Erfindung;

Fig. 4 zeigt den zeitlichen Ablauf des erfindungsgemäßen Verfahrens inklusive eines Analyseschritts;

Fig. 5 zeigt den zeitlichen Verlauf des erfindungsgemäßen Verfahrens bei einem veränderten Betriebszustand;

Fig. 6 zeigt beispielhaft das Verhalten des erfindungsgemäßen Elektroenergieregelungssystems bei einem Drei-Phasen-Fehler; und

Fig. 7 zeigt beispielhaft das Verhalten des erfindungsgemäßen Elektroenergieregelungssystems bei einem Lastanwachsen.

Wege zur Ausführung der Erfindung

Bezüglich neuer Übertragungs- bzw. Verteilungswege ist es obligatorisch, ein Systemverhalten bereitzustellen, das nicht den Rest des Systems beeinträchtigt (außer ggfs. um bestimmte Kontrollfunktionen als Hilfsdienste bereitzustellen). Dies wird durch eine Systemkontrollarchitektur erreicht, welche die Kontrolle von Übertragungswegen (Stromleitungen bzw. Kabel) ermöglicht, praktisch ohne daß der Rest des Systems beeinträchtigt wird. Dieses System wird daher als "non-intrusive system control architecture (NISC) eingeführt.

Ihm liegt die Idee zugrunde, zuerst die gewünschten Funktionen für ein regelbares Übertragungssystem zu definieren, das auf ein vorgegebenes Regelungsgerätedesign abgebildet werden kann, um diese Funktionen zu implementieren. Der solcherart funktional definierte Kontroller resultiert in regelbaren Komponenten, die leistungselektronische oder hybride, oder konventionelle Komponenten sind, und die dem System hinzugefügt werden müssen. Diese Komponenten erfüllen lediglich die gewünschten Funktionen. Maßgeblich für die Erfindung ist hierbei, daß das Kontrolldesign in einer Weise realisiert wird, daß der Rest des Systems nicht in negativer Weise beeinträchtigt wird und alle anderen Systemkomponenten unberührt bleiben.

Verschiedene Maßnahmen sind im Rahmen des NISC Ansatzes implementiert worden, von denen eine das erfindungsgemäße Elektroenergieregelungssystem mit dem zugehörigen Verfahren ist.

Im Ergebnis scheinen sendendes und empfangendes Ende einer Leitung eine einstellbare Generatoreinheit und eine Last mit selbstjustierendem Kontrollverhalten zu haben, die dann als non-intrusiv in Bezug auf die Dynamik des Restsystems bezeichnet werden kann. Durch die Anwendung des NISC-Ansatzes kann eine gewisse Robustheit erreicht werden, so daß eine koordinierte Kontrolle von sendendem und empfangendem Ende eines kontrollierten Übertragungswegs auch unter Lastspitzen und bei Fehlern sichergestellt ist.

Ziel der NISC-Architektur ist die Vereinfachung des Designprozesses, so daß neue Übertragungswege konzipiert werden können, ohne ausgedehnte Systemstudien betreiben zu müssen. Die erforderlichen Kontrolleigenschaften sollten weder das Gesamtsystem negativ beeinträchtigen noch ein Redesign bereits implementierter Regelungeinheiten erfordern. Zusätzlich erlaubt die erfindungsgemäße Architektur eine richtige Reaktion auf kritische Ereignisse und vermeidet unzureichenden und damit falschen Betrieb nach Betriebszustandsänderungen.

Insgesamt ergeben sich für die NISC-Architektur die folgenden Spezifikationen:

- Das Design neuer Regelungeinheiten erfordert keinen Neuentwurf existierender Netzwerkkontrolleinheiten;

- Verschiedene Netzwerkkontrolleinheiten arbeiten koordiniert mit demselben Kontrollansatz;

- Die Regelungseinheiten sind robust im Hinblick auf die Anforderungen an den Elektroenergiesystem-Betrieb (also tageszeitlichen und jahreszeitlichen Betriebsbedingungsschwankungen);

- Das Design der Regelungseinheiten zur Systemkontrolle und für Hilfsdienste ist modular und skalierbar für unterschiedliche Kontrollbereiche;

- Es gibt keine Notwendigkeit von Weitdistanz-Kommunikationsverbindungen, die je nach Ausführung daher vermieden werden können; und

- In Überlast-Situationen tritt kein Fehlverhalten auf.

Im folgenden soll die Funktionsweise der Erfindung beispielhaft an einer konkreten Ausführungsform erläutert werden.

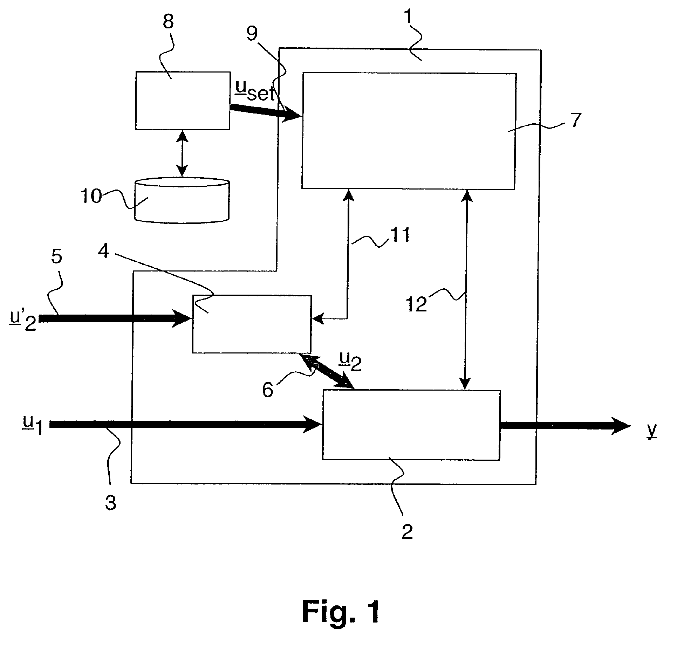

Fig.1 zeigt schematisch die verschiedenen Komponenten dieses Ausführungsbeispiels. Das Elektroenergieregelungssystem 1 weist zunächst eine Leistungsregelungseinheit 2 auf, die eingehende Messwerte $\underline{u}_1$ verschiedener elektrischer Kenngrößen über einen Eingabekanal 3 erhält. Die Kenngrößenwerte $\underline{u}_1$ können dabei, wie durch die Unterstreichung verdeutlicht, als ein Vektor vorliegen, was die Berechnung vereinfacht. Die Leistungsregelungseinheit berechnet nun die Steuergrößen $\underline{y}$, indem sie auf diese Werte die Kontrollfunktion anwendet:

$$\underline{y}=F_1(\underline{u}_1).$$

Als erfindungsgemäße, neue Komponente tritt hierbei allerdings die Bestimmung der anzuwendenden Kontrollfunktion $F_1$ hinzu. Auch dies kann in der Leistungsregelungseinheit 2 erfolgen. Zur Bestimmung der Kontrollfunktion kann beispielsweise eine Metakontrollfunktion $F_2$ dienen, in die eine Auswahlinformation $\underline{u}_2$ eingebracht wird, so daß sich insgesamt für die Berechnung der Steuerfunktion ergibt:

$$\underline{y}=F_2(F_1(\underline{u}_1),\underline{u}_2)$$

Auch $\underline{u}_2$ kann hierbei ein Vektor sein.

Wenn man beispielsweise von einer "normalen" Kontrollfunktion für einen Regelbetrieb ausgeht, so kann man für diesen Regelbetrieb von einer "Neutralität" der Metakontrollfunktion ausgehen, das heisst, dass im Normalzustand die Metakontrollfunktion keinen Einfluss hat, so daß gilt:

$$F_2(F_1(\underline{u}_1), \underline{u}_2) \cong F_1(\underline{u}_1)$$

Die Auswahlinformation wird in der Koordinationseinheit 4 erzeugt, indem eine Abbildung G auf gemessene Werte von Metakenngrößen $\underline{u}'_2$ angewendet wird. Die Abbildung G kann allgemein beschrieben werden als:

$$G: \underline{u}'_2 \rightarrow \underline{u}_2$$

Die Metakenngrößenwerte $\underline{u}'_2$ werden über einen Messkanal 5 der Koordinationseinheit 4 zugeleitet, wo sie von einem geeigneten Prozessor, beispielsweise einem entsprechend programmierten Mikrocontroller, durch Anwenden von G weiterverarbeitet werden. Die dort vorgenommene Koordination ist zeitvariant und hängt von den tatsächlichen Netzwerkkenngrößen und der Topologie ab. Daher ist das erfindungsgemäße Elektroenergieregelungssystem trotz funktioneller Parallelen nicht als zur Klasse der adaptiven Kontroller zugehörig anzusehen. Der Hauptunterschied liegt in der Abbildung G, welche definiert, welche Art von Kenngrößen auf welche Auswahlinformation abgebildet wird. Insbesondere im Vergleich zu zentralisierten Echtzeitnetzwerkkontrollern ist die notwendige Menge an Hochgeschwindigkeitsdatenübertragung drastisch reduziert, da kein zusätzliches Breitband- oder SCADA-System benötigt wird.

Die Auswahlinformation $\underline{u}_2$ wird beispielsweise über einen Hochgeschwindigkeitskanal 6 zur Leistungsregelungseinheit übertragen. Dieser Kanal 6 muß jedenfalls so schnell arbeiten können, daß das Elektroenergieregelungssystem 1 rasch genug auf Änderungen an den Messwerten $\underline{u}'_2$ reagieren kann, um Instabilitäten im Elektroenergiesystem zu vermeiden. Es ist ebenfalls möglich, die beiden Einheiten 2 und 4 in einem Gerät zu implementieren, so daß der Kanal 6 dann nur noch eine Parameterübergabe in einem Programm darstellen würde, also innerhalb einer CPU realisiert wäre.

Durch die Implementierung der Metakontrollfunktion und die Bereitstellung von Auswahlinformationen kann das Elektroenergieregelungssystem sich wesentlich besser als im Stand der Technik bekannt, an neue Situationen anpassen. Wichtig für eine erfolgreiche Bestimmung einer geeigneten Kontrollfunktion ist zum einen die Erfassung geeigneter Metakenngrößen, zum anderen deren Abbildung auf eine Auswahlinformation. Bei Erfassung einer hinreichend großen Zahl von Metakenngrößen ist dieses Kriterium allerdings nicht mehr kritisch, da dann davon auszugehen ist, daß durch geschickte Abbildung die notwendigen Auswahlinformationen generiert werden können.

Um eine permanente Kontrolle darüber zu erhalten, ob die angewendete Abbildung, die Metakontrollfunktion und/oder auch die eigentlichen Kontrollfunktionen im gegebenen Rahmen des Gesamt-Elektroenergiesystems noch ihre Funktion erfüllen können, kann weiterhin ein Analysesystem 7 vorgesehen sein, welches durch Verbindungskanäle 11 und 12 mit der Leistungsregelungseinheit 2 und der Koordinationseinheit 4 verbunden ist und Informationen erhält, die es einer Analyse unterzieht. Das Analysesystem 7 untersucht die verwendeten Funktionen bzw. Abbildungen auf ihre aktuelle Tauglichkeit zur Aufrechterhaltung der Stabilität in dem Elektroenergiesystem. Falls diese Analyse zeigt, daß die aktuell verwendeten Funktionen die Stabilität aufrechterhalten können, werden keine Änderungen vorgenommen. Ergibt die Analyse, daß bei bestimmten Betriebszuständen Instabilitäten auftreten können, so passt das Analysesystem in geeigneter Weise die Menge der Kontrollfunktionen, die Metakontrollfunktion oder die Abbildung an. Für die Analyse können neben den intern gemessenen Kenngrößen auch Daten $\underline{u}_{set}$, darunter ggfs. auch Sollgrößen für das Elektroenergiesystem eines zentralen Energiemanagementsystems 8 hinzugezogen werden, welche über einen Kanal 9 mit dem Elektroenergieregelungssystem 1, speziell mit dem Analysesystem 7, verbunden ist und welches einen globaleren Überblick über den Systemstatus liefern kann. Hierzu kann auch die SCADA Datenbank 10 herangezogen werden, die ebenfalls Informationen über den aktuellen Zustand und Zeitverlauf des Elektroenergiesystems enthält. Hierbei kann auf eine direkte Verbindung zwischen dem SCADA-System und den verschiedenen erfindungsgemäßen Regelungseinheiten verzichtet werden.

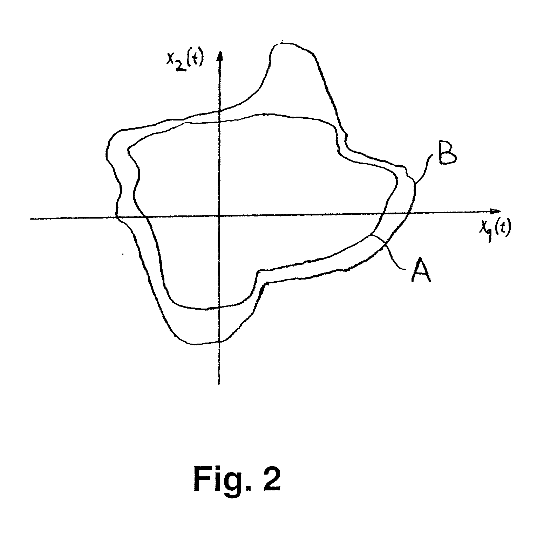

Fig. 2 soll erläutern, wie der Begriff der stabilen Bereiche zu verstehen ist. In Fig. 2 werden zwei Systemzustandsgrößen $X_1$ und $X_2$ in Abhängigkeit von der Zeit in der X- bzw. Y-Achsse dargestellt. Ein Bereich A kennzeichnet hierbei den Wertebereich der beiden Zustandsgrößen, innerhalb dessen das System im normalen Betriebszustand stabil ist, das sogenannte Einzugsgebiet, und wie er von einer Kontrollfunktion eingehalten werden kann. Bei einer Änderung am System wird die Kontrollfunktion durch die Metakontrollfunktion modifiziert oder gegen eine andere Kontrollfunktion ausgetauscht, die andere stabile Bereiche, mit B gekennzeichnet, aufweist. Es ist hierbei ein Charakteristikum der vorliegenden Erfindung, daß der neue stabile Bereich überall zumindest nicht kleiner ist als der alte, d. h. keine Regionen auftreten, wo vor Änderung ursprünglich ein stabiler Betrieb möglich war, nach Änderung aber instabile Zustände liegen. Der ursprüngliche stabile Bereich wird damit ein Subset des neuen stabilen Bereichs von Betriebspunkten, das neue Einzugsgebiet ist größer als das alte.

Im Stand der Technik konnten solche instabilen Bereiche bei Änderungen neu auftreten und erforderten einen Neuentwurf der betroffenen Leistungsregelungseinheiten.

Typische Störereignisse, welche eine Koordinierung von Regelungsmaßnahmen für Netzwerkkontroller erfordern, sind beispielsweise:

- Kurzschlüsse in Übertragungselementen;
- Überlastung elektrischer Geräte;
- Ausfälle elektrischer Geräte;
- Schnelle Wechsel im Leistungsfluß, beispielsweise solche, die mit Störungen von Kraftwerken zusammenhängen.

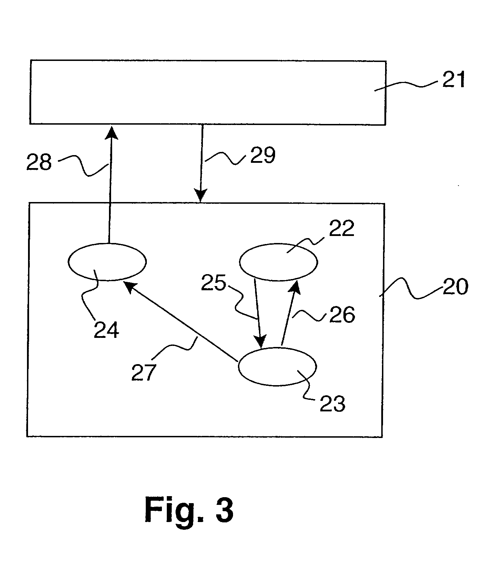

Um diese koordinierten Kontrollaufgaben durchführen zu können, ist es notwendig, die abnorme Situation im Elektroenergiesystem zu detektieren. Eine Möglichkeit zur Umsetzung ist hierbei ein heuristisch-analytisches Ereignis-Reaktions-System, wie es in Fig. 3 als Zustandsdiagramm dargestellt ist. Der Kasten 20 stellt hierbei den Bereich eines erfindungsgemäßen Elektroenergieregelungssystems 1 dar, der die eigentliche Regelung ausübt, während der Kasten 21 das Analysesystem repräsentiert. Innerhalb der Einheit 20 gibt es eine Blase 22, die den Normalbetrieb des Geräts symbolisiert. Falls ein kritisches Ereignis 25 auftritt, wird zur Blase 23, der Änderungskontrolle, übergegangen. Nach Bearbeitung des kritischen Zustands entscheidet die Änderungskontrolle, ob sie via Route 26 zum Normalzustand zurückkehrt, wenn keine topologische Änderung stattgefunden hat, oder ob sie beim Vorliegen einer topologischen Veränderung 27 einen Analyse-Trigger 24 auslöst, der über Pfad 28 das Analysesystem 21 aktiviert, wo eine topologische Analyse und ein Set-Up der heuristisch-analytischen Ereignis-Kontroller vorgenommen wird. Das Ergebnis dieser Analyse wird in Form modifizierter (sofern notwendig) Kontrollfunktionen, Metakontrollfunktion oder Abbildung G in den Bereich 20 heruntergeladen, wobei der Download-Pfad 29 verwendet wird. Dieser entspricht physikalisch den in Fig. 1 gezeigten Pfaden 11 und 12.

Im folgenden soll beispielhaft die Funktionsweise des erfindungsgemäßen, ergänzenden Analysesystems erläutert werden. Das Wissen über den Betrieb regelbarer Geräte in kritischen Situationen kann in generischen Regeln formuliert werden. Beispielhafte Regeln dieser Art für den Fall eines schnellen Stromflußkontrollers (PFC) als Beispiel für eine Leistungsregelungseinheit sind die folgenden:

1. IF "Kurzschluß auf dem PFC-Pfad OR "Kurzschluß auf einem Parallel-Pfad" THEN "Verlangsame Sollwert-Kontrolle des PFC".

Diese koordinative Maßnahme verhindert exzessive Leistungsoszillationen nach einem Kurzschluß, dem eine automatische Wiedereinschaltung folgt. Der Grund dafür ist, daß während des Kurzschlusses die Leistungsflüsse heftig schwanken. Wegen der kurzen Antwortzeit solcher PFCs antwortet dieser unmittelbar und versucht, die Sollwerte wiedereinzustellen. Somit werden die manipulierten Variablen des PFC innerhalb eines kurzen Zeitraums stark erhöht und erreichen ihren Maximalwert, noch bevor der Fehler aufgeklärt und die Wiedereinschaltung gestartet ist. Nach Störungserklärung und Fehlerbeseitigung können die erhöhten Variablenwerte zu Oszillationen führen. Eine mögliche Gegenmaßnahme ist ein Verlangsamen der Sollwertregelung. Außerdem kann ein PFC den Leistungsfluß auf Parallel-Pfaden kommutieren, so daß Scheinleistungsflüsse auf den Parallel-Pfaden durch Änderungen der Sollwerte für aktive oder reaktive Leistungsflüsse auf dem geregelten Pfad beeinflusst werden können. Durch diese Maßnahme können also Geräteüberlasten auf Parallel-Pfaden durch Sollwertänderungen vermieden werden.

2. IF "Geräteüberlastung auf Parallel-Pfad des PFC" THEN "Modifiziere den P-Sollwert des PFC"

Für die automatische Transformation dieser generischen Regeln in konkrete Regelungsaktionen muß zunächst die Netzwerktopologie automatisch analysiert werden. Das Ergebnis ist eine Abbildung aller Parallel-Pfade auf den PFC-Pfad. Diese Information wird verwendet, um eine Regelbasis für die erfindungsgemäße Leistungsregelungseinheit auf Gerätekontrollniveau für jede erfindungsgemäße Einheit in einem Elektroenergiesystem zu erstellen. Die Regelbasis ist Teil der vom Analysesystem heruntergeladenen Informationen. Spezifische Regelbasen, welche koordinierende Maßnahmen für Störfälle repräsentieren, sind Topologie-abhängig. Sie können nur jeweils das "nächste" Ereignis handhaben. Nachdem eine Gleichgewichtssituation nach einer Störung erreicht ist, müssen die Regelbasen eventuell gemäß der neuen Situation angepasst werden. Auch für reguläre Änderungen am Elektroenergiesystem müssen die Regelbasen entsprechend aktualisiert werden.

Im folgenden soll der zeitliche Ablauf der Analyse und der Reaktion des erfindungsgemäßen Elektroenergieregelungssystems näher erläutert werden. Die im optionalen Analysesystem durchgeführte Analyse kann in vorgegebenen Intervallen ausgeführt werden, um das Elektroenergieregelungssystem an neue Bedingungen anzupassen. Ein typischer Adaptionszyklus ($\Delta T_{CR}$) umfaßt eine Betriebsbedingungsanalyse mit einer Planungsphase und einer Herunterladen-Phase. Die Planungsphase dient dazu, neue Ereignis-Reaktions-Schemata und strukturelle Regelungsparameter festzulegen und neue Sollwert-Bedingungen für beispielsweise aktive oder reaktive Leistungsflußregelung oder Spannungsregelung zu bestimmen.

Das "Herunterladen" ist das Synonym für das Auffrischen der dezentralisierten Information über den Status des Elektroenergiesystems in der Leistungsregelungseinheit und/oder der Koordinationseinheit. Dies gestattet eine koordinierte Regelungstätigkeit der erfindungsgemäßen Elektroenergieregelungssysteme auch in Störfällen.

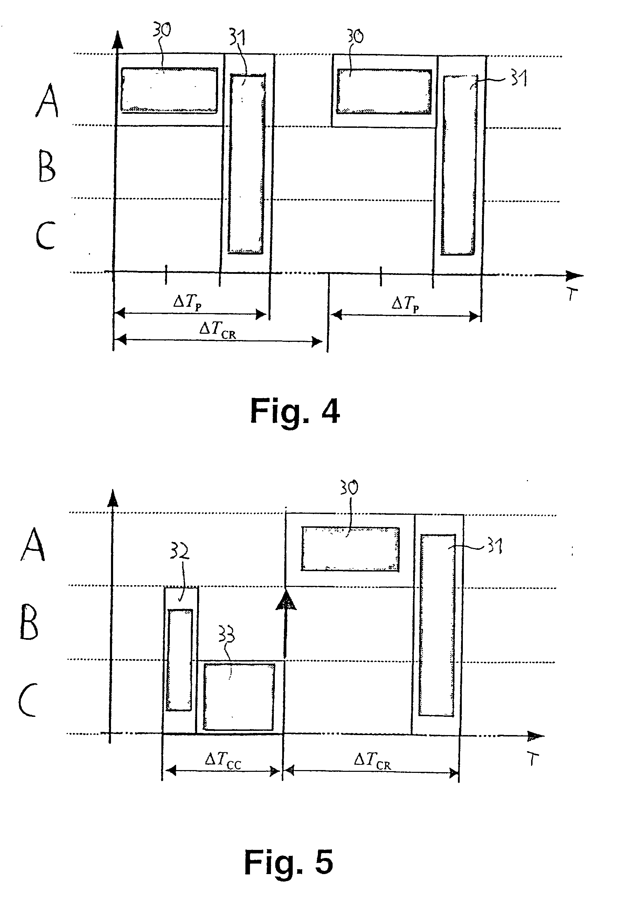

Fig. 4 zeigt den zeitlichen Verlauf dieses Adaptionszyklus. Auf der X-Achse ist die Zeit abgebildet, während auf der Y-Achse die verschiedenen Komponenten, die aktiv sind, dargestellt sind. A entspricht dabei dem Analysesystem, B dem Koordinationsmittel und C der Leistungsregelungseinheit.

Während einer zeitlichen Phase $\Delta T_P$ findet in A die Planung 30 statt und wird in allen Teilbereichen A-C das Herunterladen 31 vorgenommen. Den Rest des Adaptionszyklus $\Delta T_{CR}$ arbeitet das Elektroenergieregelungssystem in einem normalen Betriebsmodus, wie er beispielsweise durch das erfindungsgemäße Verfahren gekennzeichnet ist. Ein typischer Adaptionszyklus kann zeitlich im Bereich von 5 bis 15 Minuten liegen, allerdings sind auch kürzere oder längere Zeiträume möglich, beispielsweise Minuten, Viertelstunden, oder Tage, je nach Einsatzzweck und Notwendigkeiten.

Ein kritischer Faktor bei der Anwendung des erfindungsgemäßen Elektroenergieregelungssystems ist das dynamische Verhalten des Elektroenergiesystems.

Die Koordinierung muß gemäß den sich ändernden Betriebsbedingungen oder kritischen Ereignissen im Elektroenergiesystem durchgeführt werden. Die Erfindung löst dieses Problem mittels des Ansatzes der prädiktiven Abstimmung. Dieser Regelungsmechanismus wird durch Trigger-Signale aktiviert, die einen Störfall im System kennzeichnen und die gemäß einer lokal implementierten Kontrollmethode innerhalb des erfindungsgemäßen Elektroenergieregelungssystems durch das erfindungsgemäße Verfahren umgesetzt werden. Wie in Fig. 5 gezeigt, wird ein Zyklus der Zeit $\Delta T_{CC}$ verwendet, der beispielsweise über einen mittels der Kenngröße u'2 vermittelten Trigger 32 gestartet wird und zu einer Kontrollreaktion 33 führt, Die Analyse der Zykluszeit $\Delta T_{CC}$ und des normalen Adaptionszyklus $\Delta T_{CR}$ verdeutlicht hier zusätzlich, daß eine Online-Koordination der verschiedenen Elektroenergieregelungssysteme in einem Elektroenergiesystem nicht erreicht werden kann, da

$$\Delta T_{CC} << \Delta T_{CR}$$

sein sollte. Daher wird das erfindungsgemäße Konzept als prädiktive Abstimmung bezeichnet, da die notwendige Analyse durchgeführt wird, bevor ein Ausführungszyklus $\Delta T_{CC}$ beginnt.

Zwei Simulationsbeispiele sollen im folgenden die Erfindung im Hinblick auf die Effizienz der koordinierenden Maßnahmen erläutern. Es wird eine typische Netzwerksituation angenommen, in der drei verschiedene System A, B, und C miteinander verbunden sind. C ist mit B durch einen PFC in Leitung BC2 verbunden, A dient als Backbone für B, die miteinander über Leitungen AB1, AB2, und AB3 verbunden sind. Zum Ausgleichen der ausgetauschten Energie verwendet A einen PFC in Leitung AB1. Innerhalb des Systems B dient ein weiterer PFC zwischen den beiden Generatoren des Bereichs B der Innerbereichskontrolle, um Störungen zu vermeiden. Die PFCs sind hierbei solche gemäß der Erfindung.

Basierend auf diesem fiktiven Elektroenergiesystem werden für die numerischen Simulationen Regelbasen und globale Informationen für die verwendeten PFCs mit den beschriebenen Verfahren erzeugt. Durch eine Simulationsumgebung in MATLAB/SIMULINK werden die folgenden Szenarien verwendet, um die Eigenschaften des prädiktiven Abstimmens innerhalb eines Systems zu zeigen.

1. Drei-Phasen-Kurzschluß in der Verbindungsleitung AB2 in der Nähe des Generators A3 zum Zeitpunkt t=0.1 für 100 ms mit einer Wiedereinschaltung nach 220 ms.

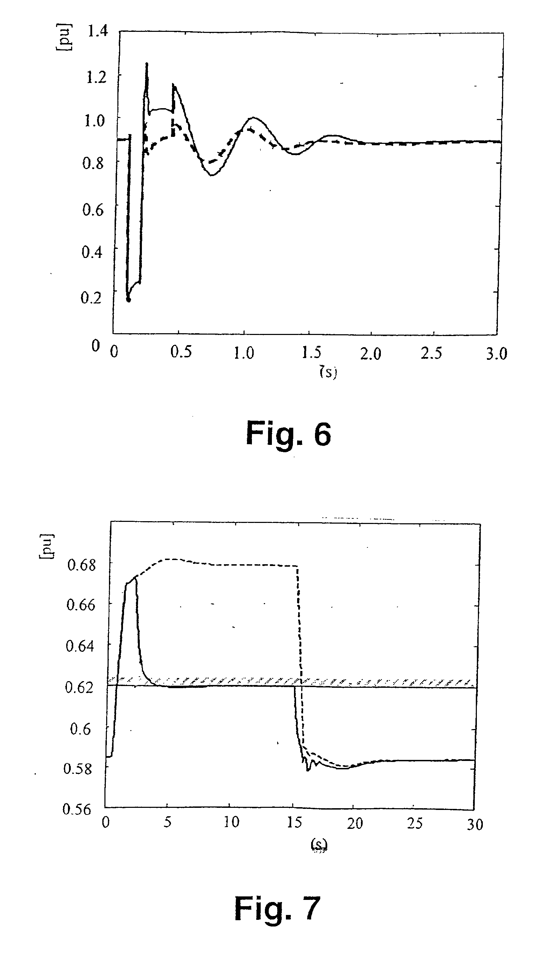

Durch eine Topologie-Analyse wurde Leitung AB2 als ein Teil des Parallel-Pfades der beiden PFCs zwischen A und B und innerhalb von B identifiziert. Die Module für die generische Regel 1 reagieren direkt auf den Kurzschluß und verlangsamen die Sollwert-Abstimmung ihrer entsprechenden Leistungregelungseinheiten durch Auswahl einer geeigneten Kontrollfunktion. Der Effekt ist aus Fig. 6 ersichtlich, in der auf der X-Achse der Zeitverlauf, auf der Y-Achse die aktive Leistungsausgabe des Generators des Bereichs A dargestellt ist. Wie ersichtlich, verursachen die beiden PFCs nur einen kleinen Anstieg der Variablen während des Kurzschlusses und der folgenden Wiedereinschaltung. Die Dämpfung ist unter Verwendung erfindungsgemäßer Mechanismen (gestrichelte Linie) besser als aus dem Stand der Technik bekannt (durchgezogene Linie).

2. Leitungsüberlastung durch einen schnellen Anstieg der Last im Knoten B3 (Teil des Bereichs B).

Im Falle schrittweiser Erhöhung der Leistung arbeiten die Lastfrequenzkontroller der Elektroenergieregelungssysteme daran, den zusätzlichen Leistungsbedarf zu decken. Die drei angenommenen PFCs erhalten dabei den Leistungsfluß auf den geregelten Pfaden. Demzufolge können sie nicht zur Übertragung des Überschusses an Energie verwendet werden. Die Kapazität der Leitung AB2, welche u.a. die Bereiche A und B verbindet, ist zu ungefähr 94 % ausgelastet, bevor die Leistung ansteigt. Bei einem plötzlichen Leistungsanstieg von 0,24 pu zum Zeitpunkt t=1 s muß die Leistungsfrequenzregelungs-Kontribution des Generators über Leitung AB2 übertragen werden. Ohne das erfindungsgemäße Verfahren (gestrichelte Linie in Fig. 7, die auf der Y-Achse den aktiven Leistungsfluß der Leitung AB2 zeigt) kommt es zu einer gewissen Überlast (die bei 0,62 pu verlaufende Linie der Fig. 7 kennzeichnet das thermische Limit). Da die Leitung als ein Element eines Parallel-Pfads zum überwachten Pfad AB1 erfindungsgemäß erkannt wird, steuert dessen PFC der Überlastung entgegen, indem er den Sollwert für den aktiven Leistungsfluß erhöht. In der Folge kommt es zu einer Leistungsfluß-Kommutierung, wodurch AB2 entlastet wird. Bei t=15 s ist die Leistung wieder auf den ursprünglichen Wert eingestellt (Fig. 7, durchgezogene Linie). Das Regelungssystem setzt sich selbsttätig zurück, wenn keine koordinierenden Regelungstätigkeiten mehr nötig sind.

Bezugszeichenliste

| | |
|---|---|
| 1 | Elektroenergieregelungssystem |
| 2 | Leistungsregelungseinheit |
| 3 | Eingabekanal |
| 4 | Koordinationskontrolleinheit |
| 5 | Messkanal |
| 6 | Hochgeschwindigkeitskanal |
| 7 | Analysesystem |
| 8 | Energiemanagementsystem |
| 9 | Datenkanal |
| 10 | SCADA-Datenbank |
| 11 | Verbindungskanal |
| 12 | Verbindungskanal |
| 20 | eigentlicher Kontrollbereich |
| 21 | Analysesystem |
| 22 | Normalbetrieb |
| 23 | Änderungskontrolle |
| 24 | Analyse-Trigger |
| 25 | kritisches Ereignis |
| 26 | Rückkehr zum Normalzustand |
| 27 | Veränderung der Topologie |
| 28 | Aktivierungspfad |
| 29 | Download-Pfad |
| 30 | Planung |
| 31 | Herunterladen |
| 32 | Trigger |
| 33 | Kontrollreaktion |
| $F_1(\underline{u}_1)$ | Kontrollfunktion |
| $F_2(F_1(\underline{u}_1),\underline{u}_2)$ | Metakontrollfunktion |
| G | Abbildung |
| $\underline{u}_1$ | Kenngrößenwerte |
| $\underline{u}'_2$ | Metakenngrößenwerte |
| $\underline{u}_2$ | Auswahlinformation |
| $\underline{u}_{set}$ | Externe Kenngrößenwerte |
| $\underline{y}$ | Steuergrößen |

**Patentansprüche**

1. Elektroenergieregelungssystem (1) in einem Elektroenergiesystem, aufweisend:

   eine Leistungsregelungseinheit (2) zum Einstellen elektrischer Zustandsgrößen und/oder veränderbarer Parameter in einer zu regelnden Stromleitung des Elektroenergiesystems mit:

   - Mitteln (3) zum Erfassen elektrischer Kenngrößenwerte ($\underline{u}_1$) der Stromleitung;

   - einem Funktionsprozessor zum Anwenden einer Kontrollfunktion ($F_1(\underline{u}_1)$) aus einer mathematischen Menge von Kontrollfunktionen auf die elektrischen Kenngrößenwerte und zum Bestimmen von Steuergrößen ($\underline{y}$) für das Erzielen der Zustandsgrößen und/oder Parameter; und

   Koordinationsmittel zum Bestimmen einer Kontrollfunktion ($F_1(u_1)$) aus der Menge von Kontrollfunktionen anhand von Betriebszuständen des Elektroenergiesystems.

2. Elektroenergieregelungssystem (1) nach Anspruch 1, **dadurch gekennzeichnet, daß** das Koordinationsmittel aufweist:

   eine Koordinationskontrolleinheit (4) mit

   - Mitteln (5) zum Erfassen elektrischer Metakenngrößenwerte ($\underline{u}'_2$) des Elektroenergiesystems, welche den Betriebszustand des Elektroenergiesystems charakterisieren;

   - einem Koordinationsprozessor zum Anwenden einer Abbildung (G) auf die Metakenngrößenwerte ($\underline{u}'_2$) zum Bestimmen einer Auswahlinformation ($\underline{u}_2$) für eine geeignete Kontrollfunktion ($F_1(\underline{u}_1)$);

   - Mitteln (6) zum Übertragen einer Auswahlinformation ($\underline{u}_2$) mit hinreichender Geschwindigkeit über die geeignete Kontrollfunktion ($F_1(\underline{u}_1)$)an die Leistungsregelungseinheit (2); sowie

   einen Metafunktionskontrollprozessor in der Leistungsregelungseinheit (2) zum Bestimmen der geeigneten Kontrollfunktion ($F_1(\underline{u}_1)$) anhand der übertragenen Auswahlinformation ($\underline{u}_2$).

3. Elektroenergieregelungssystem (1) nach Anspruch 2, **dadurch gekennzeichnet, daß** der Metafunktionskontrollprozessor Mittel zum Anwenden einer Metakontrollfunktion ($F_2(F_1(\underline{u}_1),\underline{u}_2)$) aufweist, welche die Bestimmung der geeigneten Kontrollfunktion ($F_1(\underline{u}_1)$) bewirkt und die Auswahlinformation ($\underline{u}_2$) weiterhin enthält elektrische Metakenngrößenwerte, die bei der Anwendung der Metakontrollfunktion ($F_2(F_1(\underline{u}_1),\underline{u}_2)$)verwendet werden, um die Steuergrößen mit zu bestimmen.

4. Elektroenergieregelungssystem (1) nach einem der Ansprüche 2 bis 3, **gekennzeichnet durch** eine Hochgeschwindigkeitsverbindung (6) zwischen der Koordinationskontrolleinheit (4) und der Leistungsregelungseinheit (2).

5.  Elektroenergieregelungssystem (1) nach einem der Ansprüche 2 bis 4, **dadurch gekennzeichnet, daß** die Leistungsregelungseinheit (2) und die Koordinationskontrolleinheit (4) in einem Gerät zusammengefasst sind.

6.  Elektroenergieregelungssystem (1) nach einem der Ansprüche 1 bis 5, **dadurch gekennzeichnet, daß** der Koordinationsprozessor, der Metakontrollfunktionsprozessor und/oder der Funktionsprozessor als Programme für eine Datenverarbeitungsanlage realisiert sind.

7.  Elektroenergieregelungssystem (1) nach einem der Ansprüche 2 bis 6, **dadurch gekennzeichnet, daß** die Metakenngrößen zumindest teilweise identisch mit den Kenngrößen sind.

8.  Elektroenergieregelungssystem (1) nach einem der Ansprüche 2 bis 7, **dadurch gekennzeichnet, daß** die Metakenngrößen zumindest teilweise in anderen Bereichen des Elektroenergiesystems gemessen werden als in der zu regelnden Stromleitung.

9.  Elektroenergieregelungssystem nach einem der Ansprüche 1 bis 8, **dadurch gekennzeichnet, daß** es weiterhin aufweist ein Analysesystem (7) zum Analysieren der Kenngrößen und/oder der Metakenngrößen und zum Überprüfen und/oder ggfs. Ändern der Kontrollfunktionen ($F_1(\underline{u}_1)$), der Abbildung (G) und/oder der Funktion des Metafunktionskontrollprozessors in Abhängigkeit von einem Ergebnis der Analyse.

10. Elektroenergieregelungssystem (1) nach Anspruch 9, **dadurch gekennzeichnet, daß** das Analysesystem weiterhin Mittel zum Analysieren von externen Kenngrößenwerten ($\underline{u}_{set}$) aufweist, welche von einem Energiemanagementsystem (8) des gesamten Elektroenergiesystems bereitgestellt werden können oder bereitgestellt werden.

11. Elektroenergieregelungssystem nach einem der Ansprüche 2 bis 10, **dadurch gekennzeichnet, daß** die Menge von Kontrollfunktionen ($F_1(\underline{u}_1)$) eine abzählbare Mehrzahl von Kontrollfunktionen ($F_1(\underline{u}_1)$) ist, die durch eine Metakontrollfunktion ($F_2(F_1(\underline{u}_1),\underline{u}_2)$)bestimmt ist.

12. Elektroenergieregelungssystem (1) nach einem der Ansprüche 2 bis 11, **dadurch gekennzeichnet, daß** die Menge von Kontrollfunktionen ein Kontinuum darstellt, das durch eine Metakontrollfunktion

($F_2(F_1(\underline{u}_1),\underline{u}_2)$) beschrieben ist.

13. Elektroenergieregelungssystem (1) nach einem der Ansprüche 1 bis 12, **dadurch gekennzeichnet, daß** die Kontrollfunktionen ($F_1(\underline{u}_1)$) die Steuergrößen ($\underline{y}$) so regulieren können, daß Werte vorgegebener elektrischer Kenngrößen der zu regelnden Stromleitung innerhalb vorgegebener, stabiler Wertebereiche gehalten werden können, wobei eine erste Kontrollfunktion ($F_1(\underline{u}_1)$) für einen normalen Betrieb erste stabile Wertbereiche einhalten kann und zumindest eine zweite Kontrollfunktion ($F_1(\underline{u}_1)$) für eine Änderung im Betriebszustand zweite stabile Wertbereiche einhalten kann, welche die ersten stabilen Wertbereiche mit umfassen.

14. Verfahren zum Einstellen elektrischer Zustandsgrößen und/oder Parameter in einer zu regelnden Stromleitung eines Elektroenergiesystems mit folgenden Schritten

    - Feststellen elektrischer Metakenngrößenwerte ($\underline{u}'_2$);

    - Anwenden einer Abbildung (G) auf die Metakenngrößenwerte ($\underline{u}'_2$) zur Erzeugung einer Auswahlinformation ($\underline{u}_2$) hinsichtlich einer anzuwendenden Kontrollfunktion ($F_1(\underline{u}_1)$);

    - Anwenden der Auswahlinformation ($\underline{u}_2$) auf eine Metakontrollfunktion ($F_2(F_1(\underline{u}_1),\underline{u}_2)$), welche eine anzuwendende Kontrollfunktion ($F_1(\underline{u}_1)$) aus einer mathematischen Menge von Kontrollfunktionen bestimmt; und

    - Anwenden der festgelegten Kontrollfunktion ($F_1(\underline{u}_1)$) auf elektrische Kenngrößenwerte ($\underline{u}_1$) der Stromleitung, welche die Steuergrößen ($\underline{y}$) zur Steuerung der Stromleitung festlegt.

15. Verfahren nach Anspruch 14, **dadurch gekennzeichnet, daß** die Bestimmung einer Kontrollfunktion ($F_1(\underline{u}_1)$) anhand der Auswahlinformation ($\underline{u}_2$) erfolgt, welche als modulierende Terme in die Kontrollfunktion ($F_1(\underline{u}_1)$) eingebaut werden.

16. Verfahren nach Anspruch 14 oder 15, **dadurch gekennzeichnet, daß** die Metakenngrößen ($\underline{u}'_2$) zumindest teilweise identisch mit den Kenngrößen ($\underline{u}_1$) sind.

17. Verfahren nach einem der Ansprüche 14bis 16, **dadurch gekennzeichnet, daß** die Metakenngrößen ($\underline{u}'_2$) zumindest teilweise in anderen Bereichen des Elektroenergiesystems gemessen werden als in der zu regelnden Stromleitung.

18. Verfahren nach einem der Ansprüche 14 bis 17, **da-**

**durch gekennzeichnet, daß** die Abbildung (G) bestimmte Wertebereich an Metakenngrößen ($\underline{u}'_2$) bestimmten Auswahlinformationen ($\underline{u}_2$) für Kontrollfunktionen (($F_1(\underline{u}_1)$) zuordnet und beim Zugehören der Metakenngrößenwerte ($\underline{u}'_2$) zu einem bestimmten Bereich die zu diesem Bereich zugehörige Auswahlinformation ($\underline{u}_2$) der Metakontrollfunktion ($F_2(F_1(\underline{u}_1),\underline{u}_2)$) bereitstellt.

19. Verfahren nach einem der Ansprüche 14 bis 18, **dadurch gekennzeichnet, daß** die Auswahlinformation ($\underline{u}_2$) weiterhin enthält elektrische Metakenngrößenwerte, die bei der Anwendung der Metakontrollfunktion ($F_2(F_1(\underline{u}_1),\underline{u}_2)$) verwendet werden, um die Steuergrößen ($\underline{y}$) zu bestimmen.

20. Verfahren nach einem der Ansprüche 14 bis 19, **dadurch gekennzeichnet, daß** zusätzlich eine Analyse durchgeführt wird, in der anhand der Kenngrößenwerte und/oder der Metakenngrößenwerte ($\underline{u}'_2$) die Kontrollfunktionen ($F1(\underline{u}_1)$), die Abbildung (G) und/oder die Metakontrollfunktion ($F_2(F_1(\underline{u}_1),\underline{u}_2)$) überprüft und/oder ggfs. geändert wird.

21. Verfahren nach Anspruch 20, **dadurch gekennzeichnet, daß** ein für die Durchführung des Verfahrens vom Feststellen elektrischer Metakenngrößen ($\underline{u}'_2$) bis zum Anwenden der festgelegten Kontrollfunktion ($F_1(\underline{u}_1)$) auf elektrische Kenngrößen der Stromleitung benötigter Zeitraum ($\Delta T_{CC}$) kleiner ist als ein Zeitintervall ($\Delta T_{CR}$), das zur Durchführung der Analyse und zum Ändern der Kontrollfunktionen ($F_1(\underline{u}_1)$), der Abbildung (G) und der Metakontrollfunktion ($F_2(F_1(\underline{u}_1),\underline{u}_2)$) vorgesehen ist.

22. Verfahren nach Anspruch 21, **dadurch gekennzeichnet, daß** der Zeitraum ($\Delta T_{CC}$) zumindest einhundertmal kleiner ist als das Zeitintervall ($\Delta T_{CR}$).

23. Verfahren nach Anspruch 22, **dadurch gekennzeichnet, daß** der Zeitraum ($\Delta T_{CC}$) zumindest eintausendmal kleiner ist als das Zeitintervall ($\Delta T_{CR}$).

24. Regelsystem in einem Elektroenergieregelungssystem (1) für eine zu regelnde Stromleitung in einem Elektroenergiesystem, aufweisend:

    eine mathematische Menge von Kontrollfunktionen ($F_1(\underline{u}_1)$), welche in der Lage sind, elektrische Zustandsgrößen und/oder Parameter der geregelten Stromleitung innerhalb vorgegebener, stabiler Bereiche zu halten, wobei eine Basiskontrollfunktion ($F_1(\underline{u}_1)$) für den Normalbetrieb vorgesehen ist, welche die elektrischen Zustandsgrößen und/oder Parameter innerhalb erster vorgegebener stabiler Bereiche halten kann und die weiteren Kontrollfunktionen ($F_1(\underline{u}_1)$) bezüglich dieser elektrischen Zustandsgrößen und/oder Parameter größere stabile Bereiche aufweisen als die Basiskontrollfunktion ($F_1(\underline{u}_1)$).

25. Regelsystem nach Anspruch 24, **dadurch gekennzeichnet, daß** eine Metakontrollfunktion ($F_2(F_1(\underline{u}_1),\underline{u}_2)$) eine der Kontrollfunktionen ($F_1(\underline{u}_1)$) als anzuwendende Kontrollfunktion ($F_1(\underline{u}_1)$) in Abhängigkeit von im Elektroenergiesystem gemessenen elektrischen Metakenngrößenwerten ($\underline{u}'_2$) bestimmt werden kann.

26. Regelsystem nach Anspruch 25, **dadurch gekennzeichnet, daß** es weiterhin aufweist eine Abbildung (G) zum Abbilden der Metakenngrößenwerte ($\underline{u}'_2$) auf eine Auswahlinformation ($\underline{u}_2$) über die anzuwendende Kontrollfunktion ($F_1(\underline{u}_1)$) und daß die Auswahlinformation ($\underline{u}_2$) auf die Metakontrollfunktion ($F_2(F_1(\underline{u}_1),\underline{u}_2)$) angewendet werden kann, um die anzuwendende Kontrollfunktion ($F_1(\underline{u}_1)$) zu bestimmen.

27. Regelsystem nach Anspruch 26, **dadurch gekennzeichnet, daß** die Abbildung (G) eine Auswahlinformation ($\underline{u}_2$) erzeugt, welche zugleich elektrische Metakenngrößenwerte aufweist und die Metakontrollfunktion ($F_2(F_1(\underline{u}_1),\underline{u}_2)$) derart ausgelegt ist, daß diese Metakenngrößenwerte zur Modulierung der Kontrollfunktion verwendet werden können oder verwendet werden.

28. Regelsystem nach einem der Ansprüche 24 bis 27, **dadurch gekennzeichnet, daß** es weiterhin aufweist ein Analysesystem (7), welche die Kontrollfunktionen ($F_1(\underline{u}_1)$), die Metakontrollfunktion ($F_2(F_1(u_1),u_2)$) und/oder die Abbildung (G) hinsichtlich der zu erreichenden Stabilität analysieren und nötigenfalls anpassen kann.

29. Elektroenergieregelungssystem nach einem der Ansprüche 1 bis 13, Verfahren nach einem der Ansprüche 14 bis 23 oder Regelsystem nach einem der Ansprüche 24 bis 28, **dadurch gekennzeichnet, daß** für jede Kontrollfunktion ($F_1(\underline{u}_1)$) aus der Menge an Kontrollfunktionen gilt, daß die folgende Energiefunktion V(T) für Zeitpunkte T≥0 existiert:

$$V(T) \leq V(0) + \int_0^T y(t)u(t)dt$$

$$\forall u(.), T \geq 0$$

und das Elektroenergiesystem damit passiv ist.

**30.** Elektroenergieregelungssystem nach einem der Ansprüche 1 bis 13, Verfahren nach einem der Ansprüche 14 bis 23 oder Regelsystem nach einem der Ansprüche 24 bis 28, **dadurch gekennzeichnet**, **dadurch gekennzeichnet, daß** für jede Kontrollfunktion ($F_1(\underline{u}_1)$) aus der Menge der Kontrollfunktionen gilt, daß folgende Bedingung für das Elektroenergiesystem erfüllt ist:

$$\dot{V} = \dot{V}_{PS} + \dot{V}_{CO} \leq \dot{V}_{CO} \leq 0$$

**Fig. 1**

**Fig. 2**

**Fig. 3**

**Fig. 4**

**Fig. 5**

**Fig. 6**

**Fig. 7**

**Europäisches Patentamt**

# EUROPÄISCHER RECHERCHENBERICHT

Nummer der Anmeldung

EP 01 81 0836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 438 059 A (TOKYO SHIBAURA ELECTRIC CO) 24. Juli 1991 (1991-07-24) * das ganze Dokument * | 1-7,12, 14-16,19 | H02J3/18 |
| A | RAJKUMAR V ET AL: "NONLINEAR SELF-TUNING CONTROL OF A FLEXIBLE AC TRANSMISSION SYSTEM" PROCEEDINGS OF THE CONFERENCE ON DECISION AND CONTROL. SAN ANTONIO, DEC. 15 - 17, 1993, NEW YORK, IEEE, US, Bd. 3 CONF. 32, 15. Dezember 1993 (1993-12-15), Seiten 2364-2369, XP000439027 ISBN: 0-7803-1298-8 * das ganze Dokument * | 1,14 | |
| A | AGGOUNE M E ET AL: "DESIGN OF AN ADAPTIVE VARIABLE-STRUCTURE VOLTAGE REGULATOR USING ARTIFICIAL NEURAL NETWORK" PROCEEDINGS OF THE CONFERENCE ON CONTROL APPLICATIONS. VANCOUVER, SEPT. 13 - 16, 1993, NEW YORK, IEEE, US, Bd. 1 CONF. 2, 13. September 1993 (1993-09-13), Seiten 337-343, XP000448895 * das ganze Dokument * | 1,14 | RECHERCHIERTE SACHGEBIETE (Int.Cl.7) H02J |
| X | US 5 703 791 A (NAKAMURA TOMOHARU ET AL) 30. Dezember 1997 (1997-12-30) * Spalte 7, Zeile 25 - Spalte 8, Zeile 20; Abbildungen 1,2,4 * | 1,2,9, 14,20 | |
| A | EP 0 707 370 A (ASEA BROWN BOVERI) 17. April 1996 (1996-04-17) * das ganze Dokument * | 24-28 | |

Der vorliegende Recherchenbericht wurde für alle Patentansprüche erstellt

| Recherchenort | Abschlußdatum der Recherche | Prüfer |
|---|---|---|
| DEN HAAG | 29. Mai 2002 | Gentili, L |

**Europäisches**

**Patentamt**

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**MANGELNDE EINHEITLICHKEIT DER ERFINDUNG ERGÄNZUNGSBLATT B**

Nummer der Anmeldung

EP 01 81 0836

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-8,11,12,14-19 und 29,
   30 (wenn Abhängig von Anspruch 1 oder 14)

   Elektroenergieregelungssystem (und entsprechendes Verfahren) in einem Elektroenergiesystem, aufweisend:
   eine Leistungsregelungseinheit zum Einstellen elektrischer Zustandgrössen in einer Stromleitung des Elektroenergie- systems mit
   - Mitteln zum Erfassen elektrischer Kenngrössenwerte der Stromleitung;
   - einem Funktionsprozessor zum Anwenden einer Kontrollfunktion an die elektrischen Kenngrössenwerte und zum Bestimmen von Steuergrössen für das Erzielen der Zustandsgrössen; und
   eine Koordinationskontrolleinheit mit
   - Mitteln zum Erfassen elektrischer Metakenngrössenwerte des Elektroenergiesystems,
   - einem Koordinationsprozessor zum Anwenden einer Abbildung auf die Metakeenngrössenwerte zum Bestimmen einer Auswahlinformation;
   -Mittels zum Übertragen einer Auswahlinformation an die Leistungsregelungseinheit und
   - einem Metafunktionskontrollprozessor in der Leistungsregelungseinheit zum Bestimmen der geeigneten Kontrollfunktion aus einer mathematischen Menge von Kontrollfunktionen, dadurch gekennzeichnet dass der Koordinationsprozessor, der Metafunktionskontroll- prozessor und/oder der Funktionsprozessor als Programme für eine Datenverarbeitungsanlage realisiert sind.

2. Ansprüche: 9,10,20-23

   Elektroenergieregelungssystem (und entsprechendes Verfahren) in einem Elektroenergiesystem, aufweisend:
   eine Leistungsregelungseinheit zum Einstellen elektrischer Zustandgrössen in einer Stromleitung des Elektroenergie- systems mit
   - Mitteln zum Erfassen elektrischer Kenngrössenwerte der Stromleitung;
   - einem Funktionsprozessor zum Anwenden einer Kontrollfunktion an die elektrischen Kenngrössenwerte und zum Bestimmen von Steuergrössen für das Erzielen der Zustandsgrössen und
   Koordinationsmittel zum Bestimmen einer Kontrollfunktion aus der Menge von Kontrollfunktionen anhand von Betriebszuständen des Elektroenergiesystems, dadurch gekennzeichnet dass es weiterhin aufweist ein Analysesystem zum Analysieren der Kenngrössen und/oder der Metakenngrössen.

**Europäisches**
**Patentamt**

**MANGELNDE EINHEITLICHKEIT**
**DER ERFINDUNG**
**ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

3. Ansprüche: 13,24-28 und 29,30 (wenn abhängig von Anspruch 24)

Elektroenergieregelungssytem für eine zu regelnde Stromleitung in einem Elektroenergiesystem mit einer mathematische Menge von Kontrollfunktionen wobei eine Basiskontrollfunktion für den Normalbetrieb vorgesehen ist, welche die elektrischen Zustandsgrössen innerhalb erster vorgegebener stabiler Bereiche halten kann und die weiteren Kontrollfunktionen bezüglich dieser elektrischen Zustandsgrössen grössere stabile Bereiche als die Basiskontrollfunktion aufweisen

## ANHANG ZUM EUROPÄISCHEN RECHERCHENBERICHT
## ÜBER DIE EUROPÄISCHE PATENTANMELDUNG NR.

EP 01 81 0836

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP | 0438059 | A | 24-07-1991 | JP | 3210613 | A | 13-09-1991 |
| | | | | JP | 3210614 | A | 13-09-1991 |
| | | | | AU | 622063 | B2 | 26-03-1992 |
| | | | | AU | 6864591 | A | 18-07-1991 |
| | | | | CA | 2033567 | A1 | 17-07-1991 |
| | | | | CA | 2033567 | C | 31-10-1995 |
| | | | | CN | 1053973 | A ,B | 21-08-1991 |
| | | | | DE | 69110481 | D1 | 27-07-1995 |
| | | | | DE | 69110481 | T2 | 09-11-1995 |
| | | | | EP | 0438059 | A2 | 24-07-1991 |
| | | | | US | 5099190 | A | 24-03-1992 |
| US | 5703791 | A | 30-12-1997 | CA | 2142490 | A1 | 18-08-1995 |
| | | | | JP | 7284231 | A | 27-10-1995 |
| EP | 0707370 | A | 17-04-1996 | CN | 1128431 | A ,B | 07-08-1996 |
| | | | | DE | 69511498 | D1 | 23-09-1999 |
| | | | | DE | 69511498 | T2 | 27-04-2000 |
| | | | | EP | 0707370 | A2 | 17-04-1996 |
| | | | | JP | 8205409 | A | 09-08-1996 |
| | | | | SE | 9403486 | A | 14-04-1996 |
| | | | | US | 5621626 | A | 15-04-1997 |

EPO FORM P0461

Für nähere Einzelheiten zu diesem Anhang : siehe Amtsblatt des Europäischen Patentamts, Nr.12/82